Europäisches Patentamt

European Patent Office

Office européen des brevets

(11) Publication number: **0 203 803**
**A1**

## (12) EUROPEAN PATENT APPLICATION

(21) Application number: **86303995.4**

(22) Date of filing: **27.05.86**

(51) Int. Cl.⁴: **B 32 B 27/12,** B 32 B 27/04, C 08 J 5/04, C 08 J 5/18, B 29 C 67/14, B 29 D 9/00 // B29K105:06

(30) Priority: **30.05.85 GB 8513608**

(43) Date of publication of application: **03.12.86**
**Bulletin 86/49**

(84) Designated Contracting States: **AT BE CH DE FR GB IT LI LU NL SE**

(71) Applicant: **Composite Developments Limited, Castle Chambers 43 Castle Street, Liverpool L2 9TL (GB)**

(72) Inventor: **Malcolm, Otty, 9 Sycamore Rise Shaw, Newbury Berkshire RG13 2LZ (GB)**

(74) Representative: **McNeight, David Leslie et al, McNeight & Lawrence Regent House Heaton Lane, Stockport Cheshire SK4 1BS (GB)**

(54) **Reinforced resinous material.**

(57) A reinforced resinous board comprises substantially straight reinforcing threads and a cushioning fibre assembly embedded in resin cured under pressure. Crossing threads which are desirably not woven but are in separate sheets or layers are cushioned from each other by the cushioning fibres. Fibre or filament threads not usually regarded as being adequately wetted by resin can be used in this way.

# REINFORCED RESINOUS MATERIAL

This invention relates to reinforced resinous material.

Conventionally, high-strength reinforced resinous materials have comprised a woven glass fibre reinforcement impregnated with resin. A so-called "pre-preg" is produced comprising a single impregnated layer in which the resin is dried so that it can be handled, but not cured. Multiple such pre-pregs are assembled together and hot-pressed to cure the resin under pressure and bond the layers together to achieve the required thickness.

This has, however, a number of disadvantages. One is that in the heat and pressure stage, the required pressure tends to break the brittle glass fibres where they cross over in the weave. Another is that the cured assembly can tend to delaminate under stress.

The present invention provides a reinforced resinous board and a method for making the same that does not suffer from these disadvantages.

The invention comprises a reinforced resinous material comprising substantially straight reinforcing threads and a cushioning fibre assembly embedded in resin cured under pressure.

Said reinforcing threads may comprise threads of continuous filament textile materials, and may comprise threads of continuous filament yarns and/or carbon fibre threads and/or metal threads. An advantage of the invention is that it enables fibre reinforcement to be used that is usually regarded as not being adequately wetted by resin.

The reinforcing threads may be arranged parallel to one another in the form of a warp. Though usually a warp has its threads quite closely spaced - almost touching in fact, if not actually so - a warp suitable for the present invention can be as widely spaced as desired.

There may, however, be two or more sets of reinforcing threads, each set comprising parallel threads, and the threads of any one set angled with respect to or crossing the threads of the other set or sets. Such crossing sets of threads could, on account of the presence of the cushioning fibres, be arranged in a weave, even if the threads were brittle like glass. The cushioning fibres can be arranged to deform around the threads and reduce the forces during the pressing operation tending to fracture the threads.

However, it may be preferred to arrange angled or crossing sets of threads not in a woven construction but in separate sheets or layers, and it may further be arranged to interpose cushioning fibres between the threads of such sheets or layers. While the strength and integrity of a woven fabric comes essentially from the interweaving of the warp and weft threads, the interweaving is of little or no consequence once the threads have been embedded in resin, which - provided the resin has adequately wetted all the threads and there are no voids - is effective to prevent relative displacement of even non-woven threads arranged in separate sheets or layers.

The cushioning fibres can with further advantage be arranged to extend transversely to the sheets or layers of threads whereby to provide a fibre reinforcement against delamination of the layers under stress.

The cushioning fibres can with yet further advantage be chosen so as to be adequately wetted by the resin and arranged so as to comprise the principal resin-absorbing component of the assembly. A random or cross-folded card web of aramid fibres such as Nomex (Trade Mark) or Kevlar (Trade Mark) can serve as a cushioning layer that is readily thoroughly wetted by liquid resin. A layer of threads between two such webs of aramid fibres can be firmly embedded in resin essentially held by the fibres notwithstanding that the threads may themselves not ordinarily be wetted by the resin. It is of further advantage if after assembling such layers of fibre web and threads the assembly is needled so that fibres from the fibre webs extend transversely between the webs either side of the threads. It is desirable of course not to break the reinforcing threads during such needling.

It will readily be appreciated that in the main the structures under consideration lack one quality considered essential in the conventional manufacture of pre-preg for subsequent assembly into board by hot pressing, namely that of inherent strength and integrity to enable them to undergo the conventional impregnating process. This conventional process comprises hauling the base fabric, usually glass-cloth, to be impregnated through a bath of liquid resin and then vertically upwards within a tower. The speed at which the fabric is hauled up the tower is set to match that at which the liquid resin tends to run down the fabric under gravity, the object being to give the fabric the maximum possible

-5-

exposure to the liquid resin for the best possible penetration and maximum pick up and so as to try to ensure no dry spots. The height of the tower is sufficient to allow the solvent to evaporate from the resin to the extent that the remaining resin ceases to flow freely and can be dried (but not at this stage cured) so that it can be rolled up or cut and stacked in sheets. At this stage the impregnated fabric is termed pre-preg.

The combined weight of fabric and resin place a substantial load on the fabric as it is being hauled to the top of the tower, and it is for this reason that woven fabrics, which have the best strength and least extensibility, are used as base fabrics.

Naturally, many of the constructions contemplated in connection with the present invention cannot be processed in this conventional way.

The presence of the cushioning fibres, however, which can be chosen and arranged so as to pick up resin very readily, as opposed to the conventional glass woven fabric, can obviate the need for the tower process. Structures of reinforcing threads and cushioning fibres used in connection with the present invention can be impregnated while horizontal, and the invention further

0203803

provides methods for making reinforced resinous board which are more effective and efficient than conventional methods.

According to the invention, a method for making a reinforced resinous board comprises embedding substantially straight reinforcing threads and a cushioning fibre assembly in a resin and curing said resin under pressure.

The said reinforcing threads may be clamped to hold them straight during said curing, and may be held under a pre-stressing tension during said curing.

Upper and lower layers of warpwise extending threads may be disposed in sheets either side of an intermediate layer of weftwise extending threads held in position between said warpwise extending threads.

After assembling said reinforcing threads and said cushioning fibre assembly and before impregnation said assembly may be needled so as to cause fibres of said fibre assembly to extend transversely of said assembly between said threads. Said reinforcing threads and cushioning fibre assembly may also be stitched together, additionally or alternatively to said needling.

The assembly of reinforcing threads and fibres may be impregnated while horizontal, and may be impregnated by a vacuum-pressure impregnation process.

The impregnated assembly may be pressed into a board immediately after impregnation.

The assembly is preferably impregnated with a solventless resin.

Reinforced resinous board and methods for making the same according to the invention will now be described with reference to the accompanying drawings in which:

Figure 1    is a diagrammatic cross-section of a first board,

Figure 2    is a diagrammatic cross-section of a second board,

Figure 3    is a plan view of a frame on which a reinforcing thread and cushioning fibre assembly can be prepared for impregnation,

Figure 4    is a side elevation of an impregnator and press, and

Figure 5    is a plan view of a manufacturing unit.

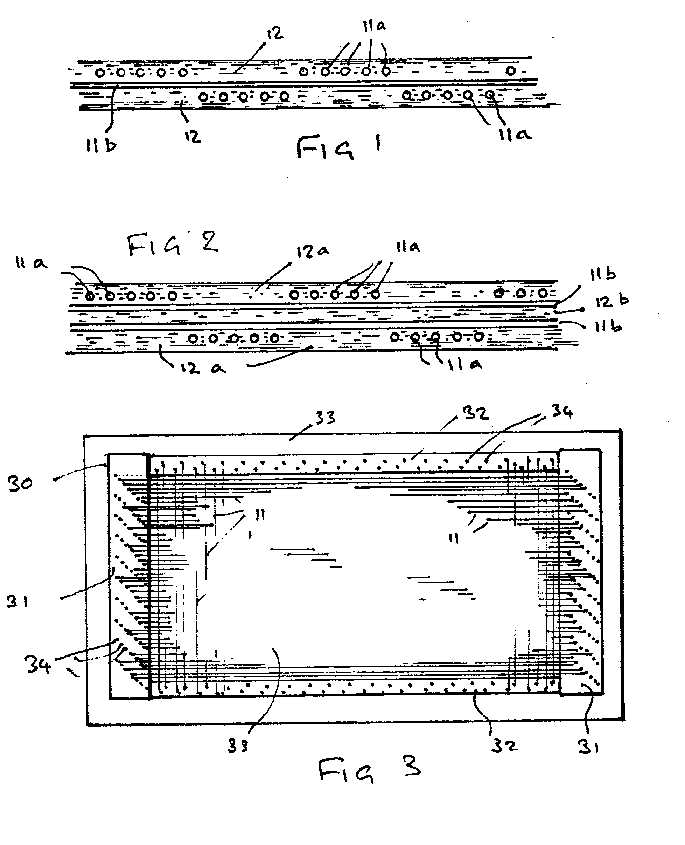

The reinforced resinous board illustrated in Figures 1 and 2 comprises substantially straight reinforcing threads 11 and a cushioning fibre assembly 12 embedded in resin 13 cured under pressure.

The reinforcing threads 11 can comprise threads of continuous filament textile materials such as yarns, which may be of strong, heat resistant synthetic materials such as aramids, Nomex, for example, or Kevlar (Trade Marks). The threads 11 can be of carbon fibre or even metal. Glass threads can be used if desired, or ceramic fibres - although it is desirable to use threads which are not brittle, brittle threads can be used on account of the presence of the cushioning fibres, and might on occasion be required (whether on their own or in combination with other threads) on account of their superior strength and thermal properties.

The board illustrated in Figures 1 and 2 comprises reinforcing threads 11a in the form of a warp. The threads 11a form one of two sets, the other

set, 11b comprising parallel threads crossing the warp set 11a at right angles in the manner of a weft, but not interwoven with the warp set 11 as in a woven fabric.

In the board illustrated in Figure 1, the warpwise extending threads 11a form two layers or sheets either side of a layer of weft threads 11b. The cushioning fibres 12 - in the form of randomly oriented or cross-folded card webs - are disposed either side of the layers of threads 11.

In the board illustrated in Figure 2, there are two layers of weft threads 11b either side of an intermediate cushioning fibre layer 12b, held between upper and lower layers or sheets of warp threads 11a, all between outer layers 12a of cushioning fibres.

The cushioning fibres 12, in the form of a random or cross-folded card web, can be needled when assembled in position with the reinforcing threads 11 so as to cause fibres to extend transversely of the assembly and this interconnects the two layers of cushioning fibres 12 either side of the reinforcing threads of the board of Figure 1 or the three layers of fibres 12 shown in Figure 2. This interconnection reduces any tendency for the board to delaminate under stress.

An alternative or additional transverse reinforcement against delamination can be provided by weftwise extending stitches.

The reinforcing thread and cushioning fibre assembly can be prepared on the frame 30 illustrated in Figure 3. The frame 30 comprises end members 31 and side members 32 on a base 33. The end and side members 31, 32 have pegs or pins 34 to which reinforcing threads 11 can be tied and on which such threads 11 can be tensioned with a pre-stressing tension. Before the reinforcing threads are put in place, a layer of cushioning fibres can be laid on the base 33, and another layer placed on top after the threads 11 have been tied in.

A needle board can then be brought to operate on the assembly from above, the needle spacing being of course arranged so as not to interfere with the reinforcing threads stretched on the frame. Needling is not required to make a solid felt from the cushioning fibres, merely to re-align some of the fibres so that they extend transversely of the assembly.

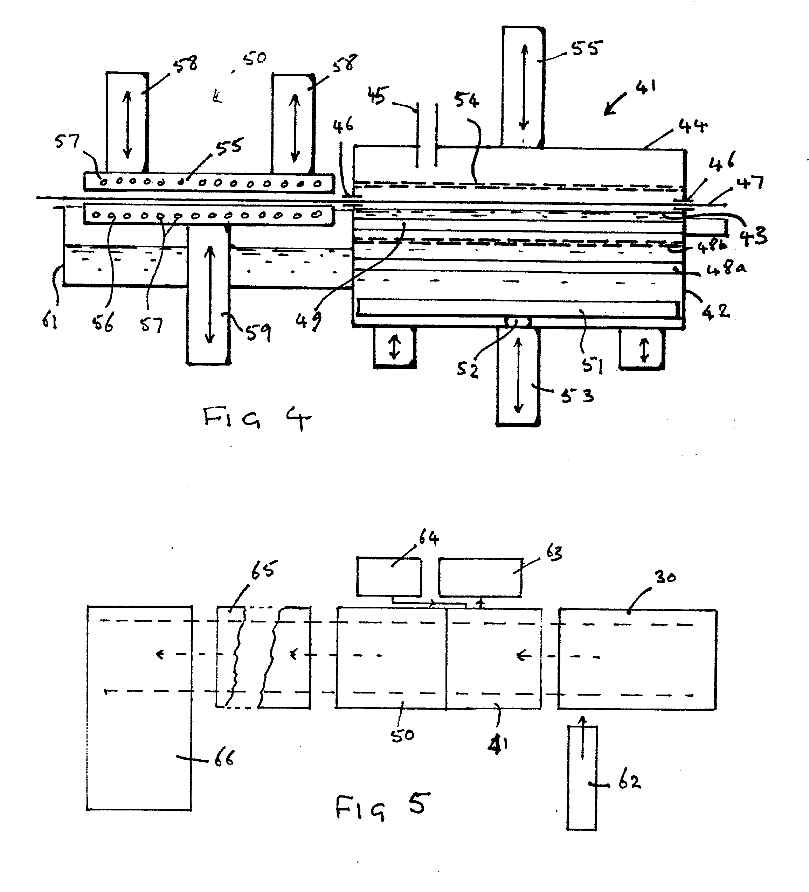

Figure 4 illustrates an impregnator and press arrangement for, inter alia, the assemblies produced on the frame illustrated in Figure 3. The impregnator 41 comprises a reservoir 42 for resin 43 with a hood arrangement 44 connected by a connector 45 to a vacuum pump arrangement (not shown). Between the upper rim 42a of the reservoir and the lower rim 44a of the hood arrangement is a seal arrangement 46 that admits a reinforcement 47 and sealingly holds the same for impregnation.

The reservoir 42 includes a cooling unit 48a, a grille 48b and a heating unit 49, all fixedly mounted above an elevatable base plate 51 on a ram 52 of a cylinder 53. A baffle 54 is in the hood arrangement 44. The hood arrangement can be lifted up from the reservoir 42 by piston-in-cylinder arrangement 55, which can, oppositely, apply sealing pressure to the seal arrangement 46.

In use, the hood arrangement 44 is lifted to allow the reinforcing thread and cushioning fibre assembly to be inserted, and then lowered into sealing relationship with the reservoir 42. Resin 43 is kept in the reservoir 42 and, in the lower part thereof, is kept relatively cool so as not to tend to cure, while in the upper part thereof, separated from the lower part, particularly so far as convection currents are concerned, by the grille 48b, the resin 43 is heated by the heating unit 49 so as to be capable of flowing readily.

Once the hood 44 is sealed to the reservoir 42, the pressure above the baffle 54 and reinforcement 47 is reduced through the connector 45 and the resin level in the reservoir 42 is raised by the ram 52 elevating the base plate 51 until the resin 43 is forced through the reinforcement 47, which is held down by the baffle 54.

The ram 52 now lowers the base plate 51 again, while the vacuum is relieved through the connector 45, so that liquid resin that was on top of the baffle 54 now flows back through the reinforcement.

This vacuum-pressure impregnation is particularly adapted for removing the entrapped air from the reinforcement and thoroughly impregnating the reinforcement with resin. The process may be cycled two or more times depending on the nature and weight of the reinforcement.

Next to the impregnator 41 is a press unit 50 comprising upper and lower ground plate press platens 55, 56 which are heated by water running through heating tubes or coils 57 embedded therein. The upper platen 55 is elevatable by rams 58 in the same way as the hood arrangement 44 of the impregnator to permit an impregnated reinforcement to be admitted after impregnation in the impregnator 41.

The lower platen 56 is adjustable vertically by a ram 59, as is the reservoir 42 of the impregnator 41 - and, therefore, the level of the upper rim 42a thereof forming part of the seal arrangement 46 - so as to be alignable with the level at which the reinforcement 47 is delivered to the impregnator 41.

Below the platens 55, 56, which may be so controlled hydraulically as to compress the impregnated reinforcement to a prescribed thickness, is a resin recovery chamber 61, for excess resin squeezed out of the impregnated material by the press unit.

Figure 5 illustrates a manufacturing unit comprising the frame 30 and a needle board 62 stored by the frame 30 to be used therewith for needling a fleece assembly thereon. The frame 30 is adjacent an impregnator 41 together with a press unit 50. Associated with the impregnator 41 is a vacuum unit 63 and a resin mix and feed arrangement 64 for feeding resin to the impregnator 41.

Beyond the press unit 50 is an oven arrangement

0203803

-14-

65 of adequate length and capable of such temperatures as will cure the resin as the impregnated reinforcement passes through.

Finally, a cut-off and cleaning station 66 is provided to receive the impregnated reinforcement.

A frame 30 having a length of, say, two metres and a width of about half a metre is a convenient size for producing both sample board to new specifications and production board. Although the hand laying techniques used in connection with the frame 30 may appear to be slow at first sight, there is a saving in time on the impregnation stage and particularly where the impregnated material already has the required thickness, as compared to the conventional process in which multiple layers of pre-preg had to be bonded together.

While the impregnator shown in Figure 5 is approximately half the length of the test piece frame, it needs only to be noted that the reinforcement can be impregnated in two sections.

Likewise, the press unit 50 can press the board in sections.

CLAIMS

1. A reinforced resinous material comprising substantially straight reinforcing threads and a cushioning fibre assembly embedded in resin cured under pressure.

2. A board according to claim 1, said reinforcing threads comprising threads of continuous filament textile materials.

3. A board according to claim 2, said reinforcing threads comprising threads of continuous filament yarns.

4. A board according to claim 2 or claim 3, said reinforcing threads comprising carbon fibre threads.

5. A board according to any one of claims 1 to 4, said reinforcing threads comprising metal threads.

6. A board according to any one of claims 1 to 5, comprising reinforcing threads arranged parallel to one another in the form of a warp.

7. A board according to any one of claims 1 to 6, comprising two or more sets of reinforcing threads, each set comprising parallel threads, the threads of any one set crossing the threads of the other set or sets.

8.      A board according to any one of claims 1 to 7, in which said fibre assembly comprises a non-woven fabric.

9.      A board according to claim 8, in which said non-woven fabric comprises a needled fleece.

10.     A board according to claim 9, said fleece being needled around said reinforcing threads.

11.     A board according to claim 8, in which said non-woven fabric comprises stitch bonded fabric.

12.     A board according to claim 11, said stitch bonded fabric comprising a non-yarn stitch bonded fabric.

13.     A board according to any one of claims 1 to 12, said reinforcing threads being contained between layers of cushioning fibre assembly.

14.     A board according to claim 13, said layers of cushioning fibre assembly being stitched together.

15.     A method for making a reinforced resinous board comprising embedding substantially straight reinforcing threads and a cushioning fibre assembly in a resin and curing said resin under pressure.

16.    A method according to claim 15, comprising clamping said reinforcing threads to hold them straight during said curing.

17.    A method according to claim 16, in which said threads are held under pre-stressing tension during said curing.

18.    A method according to any one of claims 15 to 17, in which upper and lower layers of warpwise extending threads are disposed in sheets either side of an intermediate layer of weftwise extending threads held in position between said warpwise extending threads.

19.    A method according to any one of claims 15 to 18, in which after assembling said reinforcing threads and said cushioning fibre assembly and before impregnation said assembly is needled so as to cause fibres of said fibre assembly to extend transversely of said assembly between said threads.

20.    A method according to any one of claims 15 to 19, in which said reinforcing threads and said cushioning fibre assembly are stitched together.

21.    A method according to any one of claims 15 to 20, in which the assembly of reinforcing threads and fibres is impregnated while horizontal.

22. A method according to claim 21, in which the said assembly is impregnated by a vacuum-pressure impregnation process.

23. A method according to any one of claims 15 to 22, in which the impregnated assembly is pressed into a board immediately after impregnation.

24. A method according to any one of claims 15 to 22, in which the assembly is impregnated with a solventless resin.

FIG 1

FIG 2

FIG 3

Fig 4

Fig 5

**European Patent Office**

**EUROPEAN SEARCH REPORT**

Application number

| | **DOCUMENTS CONSIDERED TO BE RELEVANT** | | EP 86303995.4 |
|---|---|---|---|

| Category | Citation of document with indication, where appropriate, of relevant passages | Relevant to claim | CLASSIFICATION OF THE APPLICATION (Int. Cl.4) |
|---|---|---|---|
| X | DE - A1 - 3 141 194 (LENTIA GMBH) <br> * Abstract; page 5, line 21 - page 6, line 17 * <br> -- | 1-4, 15,21, 24 | B 32 B 27/12 <br> B 32 B 27/04 <br> C 08 J 5/04 <br> C 08 J 5/18 |
| X | DE - A1 - 3 120 459 (LENTIA GMBH) <br> * Claims * <br> -- | 1-4, 15,21, 24 | B 29 C 67/14 <br> B 29 D 9/00 <br> /B 29 K 105: 06 |
| X | GB - A - 2 028 715 (R.S.MILLMAN, J.G. MORLEY) <br> * Abstract; page 2, lines 85-99; fig. 1,2 * <br> -- | 1-3,6, 15 | |
| X | DE - A1 - 2 821 419 (COMMONWEALTH SCIENTIFIC AND INDUSTRIAL RESEARCH ORGANIZATION) <br> * Claims * <br> ---- | 1-6 | |
| | | | **TECHNICAL FIELDS SEARCHED (Int. Cl.4)** <br><br> B 32 B <br> C 08 J <br> B 29 C 67/00 <br> B 29 D |

The present search report has been drawn up for all claims

| Place of search | Date of completion of the search | Examiner |
|---|---|---|
| VIENNA | 03-09-1986 | WEIGERSTORFER |